Europäisches Patentamt

(19) European Patent Office

Office européen des brevets

(11) Publication number: **0 158 399**
**B1**

## (12) EUROPEAN PATENT SPECIFICATION

(45) Date of publication of patent specification: **02.11.88**

(51) Int. Cl.⁴: **C 03 C 17/245**

(21) Application number: **85200495.1**

(22) Date of filing: **01.04.85**

(54) Liquid coating composition for producing high quality, high performance fluorine-doped tin oxide coatings.

(30) Priority: **10.04.84 US 598623**
**28.12.84 US 687065**
**26.02.85 US 705595**

(43) Date of publication of application:
**16.10.85 Bulletin 85/42**

(45) Publication of the grant of the patent:
**02.11.88 Bulletin 88/44**

(84) Designated Contracting States:
**AT BE CH DE FR GB IT LI NL SE**

(56) References cited:
**EP-A-0 132 024**
**JP-A-75 061 415**

(73) Proprietor: **M & T CHEMICALS, INC.**
**One Woodbridge Center**
**Woodbridge, New Jersey 07095 (US)**

(72) Inventor: **Russo, David Alan**
**14 Frances Road**
**Edison New Jersey 08817 (US)**
Inventor: **Lindner, Georg Heinrich**
**10, Haydnlaan**
**NL-4384 KV Vlissingen (NL)**

(74) Representative: **van der Veken, Johannes**
**Adriaan**
**EXTERPATENT B.V. P.O. Box 90649**
**NL-2509 LP 's-Gravenhage (NL)**

Courier Press, Leamington Spa, England.

# 0 158 399

**Description**

This invention relates to fluorine-doped tin oxide coatings, and more particularly, to a liquid coating composition for producing high quality fluorine-doped tin oxide coatings, which have a low sheet resistance and high visible light transmission.

Fluorine-doped tin oxide coatings are known to impart useful properties to many different substrate surfaces, including glass, ceramics, metals and elemental filaments. Such coated substrates find use as heat reflective elements, in energy efficient windows and in opto-electronic and semiconductor devices.

Several methods have been described in the literature to make such tin oxide coatings, including solution spray, chemical vapor deposition, powder deposition and ion sputtering.

These methods all suffer from one or more disadvantages in that the process conditions, or compositions used, or the properties of the resulting tin oxide coatings are not entirely satisfactory for certain commercial applications. Where the product is an energy efficient window, for example, success has been limited by the relatively high sheet resistance and low visible transparency of the coatings, or by the cost of the process.

The solution spray method is described, for example, in Japan Kokai 75 61,415. In this method a solution of dibutyltin diacetate and ethyl trifluoroacetate in isopropyl alcohol as a solvent is sprayed onto a glass plate to provide fluorine-doped tin oxide coatings. However, a large amount of solvent is present in the solution, generally about 50 wt.%, which must be removed during the process. Furthermore, the electrical resistivity of the coatings obtained have an unacceptable value of 230 ohms/sqare.

A chemical vapor deposition method is disclosed in EP—A—0 112 780. The process uses a gaseous mixture of butyltin trichloride and dichlorodifluoromethane which is formed from separate gaseous streams of each reactant. The gaseous mixture then is deposited onto a glass surface. However, in this method it is inconvenient to control the flow rates of the gaseous streams, the electrical properties of the coatings are not adequate.

Gordon in U.S. Patent No. 4,265,974 teaches that mixtures of tetramethyltin and α-fluoroalkyl halides can be decomposed to provide fluorine-doped tin oxide films with good optical and electrical properties. However, the reaction mixture is explosive in air above 1.9 wt.% tetramethyltin, which severely limits the rate of deposition of the coating on sheet glass. In addition, tetramethyltin and its decomposition by-products are very toxic.

Yoldas in U.S. Patent No. 4,293,594 discloses a vapor deposition method of forming a highly conductive transparent fluorine-doped tin oxide coating for fluorescent lamps. The patentee uses a gaseous mixture of dimethyltin dichloride and dimethyltin difluoride in an oxygen-containing carrier gas to produce the coating. However, these tin compounds are solids which must be vaporized at high temperatures to provide a gaseous mixture.

As will be apparent from the above-described review of the prior art, there is a need for an improved process of making high quality, high performance fluorine-doped tin oxide coatings.

In accordance with the invention, there is provided herein a liquid coating composition for making fluorine-doped tin oxide coatings on substrates such as glass which have a low sheet resistance and high visible light transmission. The composition comprises:

i) 1—30 wt.% of an organic fluorine dopant compound which is trifluoroacetic acid, trifluoroacetic anhydride, ethyl trifluoroacetoacetate, trifluoroethanol, ethyl trifluoroacetate, or pentafluoropropionic acid;

ii) 70—99 wt.% of an organotin compound which is an alkyltin trichloride, a dialkyltin dichloride, an alkyldichlorotin acetate, an alkylchlorotin diacetate, a dialkylchlorotin acetate an ester tin trichloride, or tin tetrachloride and

iii) optionally up to 10 wt.% of a polar organic compound.

In a preferred form of the invention, the liquid coating composition includes 2—10 wt.% of the organic fluorine compound, and 90—98 wt.% of the organotin compound. The fluorine dopant preferably is trifluoroacetic acid, trifluoroacetic anhydride or ethyl trifuloroacetoacetate, and the organotin compound is monobutyltin trichloride or tin tetrachloride.

The liquid coating composition of the invention may include also a polar organic compound, in an amount of about 1—10 wt.% of the composition, which will insure stability of the liquid composition at low temperatures. When the polar organic liquid is present, the liquid coating composition includes 2—10 wt.% of the organic fluorine compound, 80—97 wt.% of the organotin compound and 1—10 wt.% of the polar organic liquid.

The method used herein to produce high quality, high performance fluorine-doped tin oxide coatings from the liquid coating composition of the invention is chemical vapor deposition. In this method the liquid composition is vaporized and contacted in an oxygen-containing atmosphere with a substrate maintained at a temperature above the decomposition temperature of said vapor. Preferably vaporization of the liquid coating composition is carried out by injecting the liquid into a carrier gas maintained at a temperature sufficient to vaporize said liquid.

Deposition is carried out on glass for 45 seconds or less, to produce a fluorine-doped tin oxide coating having a thickness of 160—250 nm, a sheet resistance of 40 ohms/sq or less, a visible light transmission of

2

at least 80% and an IR reflectivity of 70% or more. In the preferred form of the invention, the deposition time is 10 seconds or less und the sheet resistance is 30 ohm/sq or less.

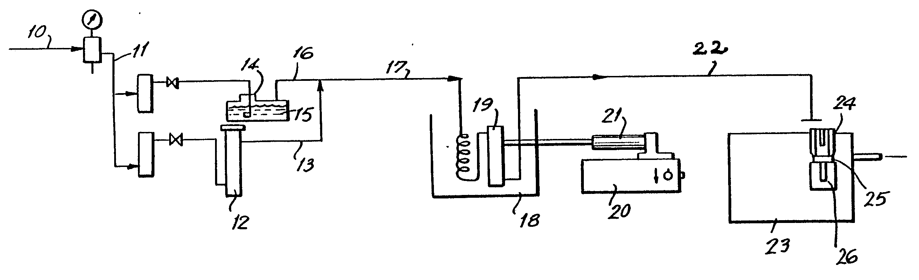

In order to better understand the invention reference will be made to the accompanying drawing in which:

The Figure is a schematic diagram of an apparatus for carrying out a coating process using the liquid coating composition of the invention.

Referring now to the Figure, there is shown a diagrammatic representation of an apparatus suitable for carrying out the process of the present invention. Accordingly, a carrier gas 10 which includes oxygen, with air being preferred, is metered through a feed line 11 at a predetermined flow rate suitably about 1—30 l/min., and preferably about 3—15 l/min., through an air dryer tower 12 to provide a stream 13 of dry air. A separate air stream may be directed through a humidifier 14 containing a suitable quantity of water 15 to provide a wet air stream 16 a desired relative humidity. Thereby an air stream 17, either dry or wet, may be passed through an evaporator 18 containing vessel 19 for holding the liquid coating composition of the invention. The liquid composition is supplied to evaporator 18 by syringe pump 20 and syringe 21. The air stream is heated from an oil bath (not shown) to a desired vaporization temperature.

The vaporized liquid coating composition in the air stream 22 travels to a deposition chamber 23 having a coating nozzle 24 in which a substrate 25 is mounted on a heated plate 26. After deposition of the desired coating the gaseous by-products of the deposition are exhausted.

The liquid coating composition of the invention is made up of 1—30 wt.% of an organic fluorine dopant compound, which is selected from trifluoroacetic acid, trifluoroacetic anhydride, ethyl trifluoroacetoacetate, trifluoroethanol, ethyl trifluoroacetate or pentafluoropropionic acid, and 70—99 wt.% of an organotin compound which is an alkyltin trichloride, dialkyltin dichloride an alkyldichlorotin acetate, a dialkylchlorotin acetate, an alkylchlorotin diacetate, an ester tin trichloride, or tin tetrachloride. Suitable organotin compound include monobutyltin trichloride, isobutyltin trichloride, methyltin trichloride, dibutyltin dichloride, diisobutyltin dichloride, di-t-butyltin dichloride, butyldichlorotin acetate, butylchlorotin diacetate, carbethoxyethyltin trichloride and tin tetrachloride.

Preferably, the liquid coating composition comprises 2—10 wt.% of trifluoroacetic acid, trifluoroacetic anhydride or ethyl trifluoroacetoacetate, and 90—98 wt.% of monobutyltin trichloride or tin tetrachloride.

The essential characteristic of the coating composition of the invention is that it is liquid at room temperature and includes a predetermined high concentration of the tin component with a sufficient amount of fluorine dopant.

The term "alkyl" used herein includes a straight chain and branched alkyl group which has one to six carbon atoms.

The term "organotin" compound used herein includes organotins and tin tetrachloride.

The liquid coating composition of the invention may include 1—10% of a polar organic compound, such as methylisobytyl ketone, acetic anhydride or ethyl acetate, which will insure that the composition remains stable in one liquid phase below room temperature, e.g. even at −15°C. Thereby the liquid composition may be conveniently stored outdoors or transported during winter weather without becoming hazy which would evidence phase separation. Preferably the liquid coating composition then includes 2—10 wt.% of the organic fluorine compound, 80—97 wt.% of the organotin compound and 1—10 wt.% of the polar organic liquid.

The vaporization temperature in the process usually ranges from about 100° to about 400°C, and preferably about 150° to 250°C. The substrate temperature ranges from above 400°C to below 700°C, preferably about 550° to about 650°C.

The carrier gas is an oxygen-containing gas which may be air or a mixture of oxygen and an inert gas, and is preferably air.

The carrier air may be dry or wet in the process of the invention, and, accordingly, the relative humidity of the air at 18°C may vary from 0—100%. Preferably the humidity ranges from 10—50%, where the rate of deposition is enhanced without introducing unnecessary haze into the coating.

The air flow preferably ranges from about 1 to about 20 l/min with the preferred rate being about 3—15 l/min. The substrate to be coated may be glass, ceramics, solid state materials, metals, elemental filaments and the like.

The process conditions can be varied to provide a hard resistance fluorine-doped tin oxide coating on many substrates with acceptable transmittance, reflectance and conductivity properties. For example, if the substrate to be coated is glass made by the flotation process, the sheet resistance of the coating at the thickness of about 160 to 250 nm will be 40 ohm/sq or less, and, in a preferred form of the invention, less than 30 ohms/sq. Thicker films above 250 nm will have lower sheet resistances but the light transmittance of the glass will be reduced. Below 160 nm thickness the conductivity of the glass will be too low and the film will permit too great a heat loss from a room protected by such coated glass.

The sheet resistance (ohms/sq) of the tin oxide film is measured with a conventional four point probe according to ASTM standard method F374-81.

The film thickness is measured by the beta-back-scatter method according to British Standards Institution method BS5411: Part 12, 1981, ISO 3543-1981.

The infrared reflectivity is measured by a specular reflectance technique described J. Stewart in "Infrared Spectroscopy", Marcel Dekker, Inc., N.Y. 1970 p 539 ff.

3

The visible transmittance is measured on a UV/vis spectrophotometer over the 400—800 nm region, versus air and the % $T_{vis}$ is averaged over the wavelengths.

The bulk conductivity was determined from the sheet resistance and the film thickness according to the well known relationship.

$$\alpha = \frac{1}{R_\square \cdot t}$$

where

$\alpha$ equals conductivity in $(ohm\ cm)^{-1}$

$R_\square$ equals sheet resistance in ohms/sq.

t equals film thickness in centimeters.

Films prepared according to the preferred embodiments of the invention have infrared reflectivities greater than 70% at the conventional 10 micrometer wavelength of light which is characteristic of thermal infrared radiation at room temperature, visible transmittance of 80% or greater, sheet resistances of less than 40 ohm/sq. and conductivities greater than 1250 $(ohm\ cm)^{-1}$ for films 160—250 nm thick. The films show a very light orange color in transmitted light, a light blue iridescence in reflected light, and are substantially haze-free.

The advantages of this invention can be more readily appreciated by reference to the following examples. It should be noted that in each example the results shown in the Tables are the best achievable over a range of process conditions. In these examples the process parameters are 1) the rate of addition of the liquid composition at a 2) predetermined vaporization temperature given as the temperature of the carrier air, 3) the flow rate of the carrier air, 4) the relative humidity of the carrier air, 5) the deposition temperature, which is given as the temperature of the heating block, and 6) the time of deposition. The properties of the coatings are 1) sheet resistance, 2) film thickness and 3) film conductivity.

The components of the liquid coating composition of the invention are presented in the Tables as follows:

Liquid coating composition

Organic fluorine dopant compound
TFA      =trifluoroacetic acid
TFAA     =trifluoroacetic anhydride
ETFAA    =ethyl trifluoroacetoacetate
ETFA     =ethyl trifluoroacetate
PFPA     =pentafluoropropionic acid
TFE      =trifluoroethanol

Organotin compound
MBTC     =monobutyltin trichloride
ESTC     =carboethoxyethyltin trichloride
BDTA     =butyldichlorotin acetate
BCTA     =butylchlorotin diacetate
IBTC     =isobutyltin trichloride
DIBTC    =diisobutyltin dichloride
DBTC     =dibutyltin dichloride
DTBTC    =di-t-butyltin dichloride
MTC      =methyltin trichloride
TT       =tin tetrachloride

Polar organic compound
ACAN     =acetic anhydride
ETAC     =ethyl acetate
MIBK     =methylisobutyl ketone

4

TABLE I

| Example No. | 1 | 2 | 3 | 4 | 5 | 6* | 7* | 8* | 9* |
|---|---|---|---|---|---|---|---|---|---|
| | | | | | | 4/5% TFA | 4.6% TFA | 4.5% TFA | 4.5% TFA |
| Composition (% by wt.) | 5.7% TFA 94.3% MBTC | | | 6% TFA 94% MBTC | 4.8% TFAA 95.2% MBTC | 4.5% ACAN 91.0% MBTC | 2.3% ETAC 93.1 MBTC | 4.5% ACAN 91.0 MBTC | 4.5% ACAN 91.0% MBTC |
| Process conditions | | | | | | | | | |
| Rate of addition of liquid composition (ml/hr) | 9.7 | 19.4 | 19.4 | 14 | 6.5 | 17.8 | 19.4 | 20.5 | 29.5 |
| Temperature of carrier air (°C) | 140 | 150 | 150 | 180 | 150 | 150 | 150 | 167 | 150 |
| Flow rate of carrier air (l/min) | 10 | 10 | 10 | 4.6 | 10 | 10 | 10 | 3.7 | 4.2 |
| Relative humidity of of air at 18°C (%) | 14 | 100 | 0 | 14 | 47 | 47 | 47 | 14 | 14 |
| Temperature of heating block (°C) | 630 | 560 | 560 | 625 | 560 | 655 | 690 | 650 | 650 |
| Deposition time (sec) | 9 | 6 | 32 | 10 | 14 | 5.3 | 4 | 8 | 7 |
| Properties of the coating | | | | | | | | | |
| Sheet resistance R (ohm/sq) | 28 | 37 | 36 | 37 | 26 | 22 | 22 | 35 | 32 |
| Film thickness (nm) | 187 | 198 | 194 | 192 | 200 | 200 | 185 | 207 | 200 |
| Conductivity (ohm cm)$^{-1}$ | 1910 | 1365 | 1432 | 1406 | 1932 | 2270 | 2460 | 1380 | 1562 |

*liquid stays clear at −15°C.

TABLE II

| Example No. | 10 | 11 | 12 | 13 | 14 | 15 | 16 | 17 | 18 |
|---|---|---|---|---|---|---|---|---|---|
| | | | | | | 7.8% TFA | 8.3% TFA | 7% TFA | |
| Composition (% by wt.) | 25.6% TFA 74.4% ESTC | 5% TFA 95% BDTA | 18% TFA 82% BCTA | 10% TFA 90% IBTC | 5% TFA 95% DIBTC | 9.8% ACAM 82.4% DBTC | 8.3% ACAN 83.4% DTBTC | 10% ACAN 83% MTC | 4% TFA 96% TT |
| **Process conditions** | | | | | | | | | |
| Rate of addition of liquid composition (ml/hr) | 14.4 | 30.6 | 30.6 | 30.6 | 30.6 | 22.3 | 22.3 | 15.5 | 6.5 |
| Temperature of carrier air (°C) | 200 | 204 | 200 | 150 | 150 | 200 | 175 | 125 | 150 |
| Flow rate of carrier air (l/min) | 3.7 | 3.7 | 3.7 | 3.7 | 3.7 | 3.7 | 3.7 | 3.7 | 10 |
| Relative humidity of air (%) | 25 | 75 | 100 | 50 | 50 | 50 | 50 | 50 | 47 |
| Temperature of heating block (°C) | 650 | 650 | 650 | 650 | 650 | 650 | 650 | 650 | 560 |
| Deposition time (sec) | 40 | 6 | 30 | 45 | 18 | 27 | 7.5 | 7 | 18 |
| **Properties of the coating** | | | | | | | | | |
| Sheet resistance R (ohm/sq) | 24 | 35 | 39 | 38 | 32 | 30 | 31 | 34 | 30 |
| Film thickness (nm) | 206 | 201 | 198 | 203 | 188 | 201 | 205 | 211 | 200 |
| Conductivity (ohm cm)$^{-1}$ | 2022 | 1421 | 1302 | 1296 | 1661 | 1658 | 1574 | 1394 | 1667 |

TABLE III

| Example No. | 19 | 20 | 21 | 22 | 23 |
|---|---|---|---|---|---|
| | | 7% ETFAA | | | |
| Composition (% by wt.) | 5% ETFAA 95% MBTC | 10% ACAN 83.9% MTC | 25% ETFA 75% MBTC | 16% TFE 84% MBTC | 3.5% PFPA 96.5% MBTC |
| **Process conditions** Rate of addition of liquid composition (ml/hr) | 15.1 | 22.3 | 26 | 9.7 | 6.5 |
| Temperature of carrier air (°C) | 150 | 150 | 150 | 150 | 150 |
| Flow rate of carrier air (l/min) | 3.7 | 3.7 | 10 | 10 | 10 |
| Relative humidity of air (%) | 100 | 50 | 0 | 0 | 0 |
| Temperature of heating block (°C) | 650 | 650 | 620 | 560 | 625 |
| Deposition time (sec) | 4 | 7.5 | 18 | 41 | 33 |
| **Properties of the coating** Sheet resistance R (ohm/sq) | 29 | 37 | 24 | 25 | 35 |
| Film thickness (nm) | 196 | 220 | 200 | 224.4 | 190 |
| Conductivity (ohm cm)$^{-1}$ | 1759 | 1228 | 2083 | 1786 | 1540 |

Table I, Example 1—9

In these examples a glass substrate is coated by chemical vapor deposition using a liquid coating composition of trifluoroacetic acid or trifluoroacetic anhydride, and monobutyltin trichloride, within predetermined composition ranges. In examples 6—9 a small amount of acetic anhydride ethyl acetate or methylisobutyl ketone is included in the composition as a low temperature phase stabilizer.

The results of Examples 1—9 demonstrate that trifluoroacetic acid and trifluoroacetic anhydride (from which trifluoroacetic acid sofmred in situ in a humid air atmosphere) provide fluorine-doped tin oxide coatings having high performance properties, including a sheet resistance below 40 ohm/sq at a film thickness of about 200 nm and a deposition time below 35 seconds. In Examples 6 and 7, an advantageous sheet resistance of 22 ohm/sq is obtained. Typically the infrared reflectivity of the tin oxide coatings produced in the Examples was greater than 70% as measured at 10 micrometers. The visible light transmission of the coatings in the Examples was 80% or greater.

With respect to process conditions, it is apparent, that at a given addition rate, the presence of some moisture during deposition is desirable to reduce the deposition time.

The presence of small amounts of a polar organic liquid in the composition (Ex. 6—9) provides useful coatings which are stable against phase separation at temperatures as low as −15°C.

Table II, Examples 10—18

In Table II there is shown the results of coating a glass substrate by chemical vapor deposition from a liquid coating composition of liquid trifluoroacetic acid and various organotin compounds other than butyltin trichloride. These organotin compounds generally require a larger percentage of TFA to form a liquid coating composition, and/or a higher rate to provide deposition times and sheet resistances comparable to Examples 1—9.

Tin tetrachloride in combination with TFA provides fluorine-doped tin coatings having excellent properties under advantageous reaction conditions.

Table III, Examples 19—23

In Table III there is shown results with fluorine dopants other than TFA and TFAA in combination with MBTC or MTC. It is seen that ethyl trifluoroacetoacetate, ETFAA, provides an excellent coating even at low concentrations of the dopant in the composition, ETFA and TFE dopants are suitable but both require a higher concentration of dopant. Furthermore these dopants require a higher rate of addition of the

7

**0 158 399**

composition into the deposition chamber to provide rasonable deposition times. PFPA dopant provides a liquid coating composition at a low dopant concentration but both the film resistance and the deposition times are at the high end of the desired ranges.

Example 24

The effect of a change in Relative Humidity on deposition rate of the coating was evaluated, using the compositions of Examples 7, 8, 11 and 14 to deposit the film. The results show that an increase in RH will generally increase the deposition rate. The relative magnitude of the increase, however, is dependent on other parameters, such as addition rate and air flow.

Example 25

The effect of air flow on deposition rate was evaluated using the composition of Example 19. The results show that, for a fixed tin concentration, the deposition rate is directly dependent on air flow rate.

Example 26

The effect of deposition temperature on the deposition rate was studied. It was found that, generally, as temperature was increased to about 600°C, the deposition rate increased. Above about 600°C the glass temperature had no effect on deposition rate at the vapor velocities shown.

**Claims**

1. A liquid coating composition for making high quality fluorine-doped tin oxide coatings having a low sheet resistance and high visible light transmission characterized by comprising:

i) 1—30 wt.% of an organic fluorine dopant compound which is selected from trifluoroacetic acid, trifluoroacetic anhydride, ethyl trifluoroacetoacetate, trifluoroethanol, ethyl trifluoroacetate or pentafluoropropionic acid;

ii) 70—99 wt.% of an organotin compound which is selected from an alkyltin trichloride, a dialkyltin dichloride, an alkyldichlorotin acetate, a dialkylchlorotin acetate, an alkylchlorotin diacetate, an ester tin trichloride, or tin tetrachloride and

iii) optionally up to 10 wt.% of a polar organic compound

2. A liquid coating composition according to Claim 1 in which said fluorine dopant is selected from trifuloroacetic acid; trifluoroacetic anhydride or ethyl trifluoroacetate and said organotin compound is selected from monobutyltin trichloride; tin tetrachloride; diisobutyltin dichloride or butyldichlorotin acetate.

3. A liquid coating composition as in either of Claims 1 or 2 characterized in that said fluorine dopant is 2—10 wt.%, and said organotin compound is 90—98 wt.%, of the composition.

4. A liquid coating composition according to anyone of Claims 1 or 2, characterised by including 1—10 wt.% of the polar organic compound.

5. A liquid coating composition according to anyone of Claims 1, 3 or 4, characterised in that said fluorine dopant is selected from trifluoroacetate or trifluoroacetic acid and said organotin compound is selected from di-t-butyltin dichloride and methyltin trichloride.

6. A liquid coating composition according to anyone of Claims 1 or 4, characterised by comprising 2—10 wt.% of trifluoroacetic acid, 80—97 wt.% of monobytyltin trichloride and 1—10 wt.% of a polar organic liquid.

7. A liquid coating composition according to Claim 4, characterised in that the polar organic compound is selected from methylisobutyl ketone, acetic anhydride or ethyl acetate.

8. A method of producing a high quality fluorine-doped tin oxide coating having a low sheet resistance and high visible light transmission characterised by comprising;

a) forming a liquid coating composition of

i) 1—30 wt.% of an organic fluorine dopant compound which is selected from trifluoroacetic acid, trifluoroacetic anhydride;

ii) 70—99 wt.% of an organotin compound which is selected from an alkyltin trichloride, a dialkyltin dichloride, an alkyldichlorotin acetate, a dialkylchlorotin acetate, an alkylchlorotin diacetate, an ester tin trichloride, or tin tetrachloride; and

iii) optionally up to 10 wt.% of a polar organic compound

b) vaporizing said liquid composition at 100°—400°C, and

c) contacting said vapor in an oxygen-containing atmosphere with a substrate maintained at a temperature above 400° and below 700°C, said deposition is carried out for 45 seconds or less to produce a coating having a thickness of 160—250 nm, a sheet resistance of 40 ohms/square or less, an infrared reflectivity of greater than 70% and a visible light transmission of at least 80%.

9. A method of producing a high quality fluorine-doped tin oxide coating according to Claim 8, characterised in that said oxygen-containing atmosphere is air.

10. A method according to Claim 8, characterised in that said substrate is glass.

8

**Patentansprüche**

1. Flüssige Beschichtungszusammensetzung zum Herstellen von hochqualitativen fluordotierten Zinnoxidbeschichtungen mit niedrigem Flächenwiderstand und hoher sichtbarer Lichtdurchlässigkeit, dadurch gekennzeichnet, daß sie

i) 1 bis 30 Gew.-% einer organischen Fluordotierverbindung, die ausgewählt ist aus Trifluoroessigsäure, Trifluoracetanhydrid, Äthyltrifluoracetoacetat, Trifluoräthanol, Äthyltrifluoracetat oder Pentafluorpropionsäure,

ii) 70 bis 99 Gew.-% einer Organozinnverbindung, die ausgewählt ist aus Alkylzinntrichlorid, Dialkylzinndichlorid, Alkyldichlorzinnacetat, Dialkylchlorzinnacetat, Alkylchlorzinndiacetat, Esterzinntrichlorid oder Zinntetrachlorid, und

iii) gegebenenfalls bis zu 10 Gew.% einer polaren organischen Verbindung umfaßt.

2. Flüssige Beschichtungszusammensetzung nach Anspruch 1, in der das Fluordotiermittel ausgewählt ist aus Trifluoressigsäure, Trifluoracetanhydrid oder Äthyltrifluoracetat und die Organozinnverbindung ausgewählt ist aus Monobutylzinntrichlorid, Zinntetrachlorid, Diisobutylzinndichlorid oder Butyldichlorzinnacetat.

3. Flüssige Beschichtungszusammensetzung nach Anspruch 1 oder 2, dadurch gekennzeichnet, daß das Fluordotiermittel 2 bis 10 Gew.% und die Organozinnverbindung 90 bis 98 Gew.% der Zusammensetzung ausmachen.

4. Flüssige Beschichtungszusammensetzung nach Anspruch 1 oder 2, dadurch gekennzeichnet, daß sie 1 bis 10 Gew.% der polaren organischen Verbindung aufweist.

5. Flüssige Beschichtungszusammensetzung nach einem der Ansprüche 1, 3 oder 4, dadurch gekennzeichnet, daß das Fluordotiermittel ausgewählt ist aus Trifluoracetat oder Trifluoressigsäure und die Organozinnverbindung ausgewählt ist aus Di-tert.butylzinndichlorid und Methylzinntrichlorid.

6. Flüssige Beschichtungszusammensetzung nach einem der Ansprüche 1 bis 4, dadurch gekennzeichnet, daß sie 2 bis 10 Gew.% Trifluoressigsäure, 80 bis 97 Gew.% Monobutylzinntrichlorid und 1 bis 10 Gew. einer polaren organischen Flüssigkeit umfaßt.

7. Flüssige Besichtungszusammensetzung nach Anspruch 4, dadurch gekennzeichnet, daß die polare organische Verbindung ausgewählt ist aus Methylisobutylketon, Acetanhydrid oder Äthylacetat.

8. Verfahren zum Herstellen einer hochqualitativen fluordotierten Zinnoxidbeschichtung mit niedrigem Flächenwiderstand und hoher sichtbarer Lichtdurchlässigkeit, dadurch gekennzeichnet, daß es umfaßt:

a) das Bilden einer flüssigen Beschichtungszusammensetzung aus

i) 1 bis 30 Gew.% einer organischen Fluordotierverbindung, die ausgewählt ist aus Trifluoressigsäure und Trifluoracetanhydrid,

ii) 70 bis 99 Gew.% einer Organozinnverbindung, die ausgewählt ist aus Alkylzinntrichlorid, Dialkylzinndichlorid, Alkyldichlorozinnacetat, Dialkylchlorzinnacetat, Alkylchlorzinndiacetat, Esterzinntrichlorid oder Zinntetrachlorid, und

iii) gegebenenfalls bis zu 10 Gew.% einer polaren organischen Verbindung,

b) das Verdampfen dieser flüssigen Zusammensetzung bei 100 bis 400°C, und

c) das Inberührungbringen dieses Dampfes in einer sauerstoffhaltigen Atmosphäre mit einem Substrat, das bei einer Temperatur oberhalb 400 und unterhalb 700°C gehalten wird, welche Abscheidung während 45 Sekunden oder weniger durchgeführt wird, wobei eine Beschichtung mit einer Dicke von 160 bis 250 nm, einem Flächenwiderstand von 40 Ohm/Quadrat oder weniger, einem Infrarotreflexionsvermögen von größer als 70% und einer sichtbaren Lichtdurchlässigkeit von mindestens 80% erhalten wird.

9. Verfahren zum Herstellen einer hochqualitativen fluordotierten Zinnoxidbeschichtung nach Anspruch 8, dadurch gekennzeichnet, daß die sauerstoffhaltige Atmosphäre Luft ist.

10. Verfahren nach Anspruch 8, dadurch gekennzeichnet, daß das Substrat Glas ist.

**Revendications**

1. Une composition de revêtement liquide pour la production de revêtement d'oxyde d'étain dopé au fluor de haute qualité et présentant une faible résistance pelliculaire et un coefficient élevé de transmission de lumière visible, caractérisée en ce qu'elle comprend:

(i) de 1 à 30% en poids d'un dérivé dopant de fluor organique choisi parmi: acide trifluoroacétique, anhydride trifluoroacétique, trifluoroacétoacétate d'éthyle, trifluoroéthanol, trifluoroacétate d'éthyle ou acide pentafluoropropionique;

(ii) de 70 à 99% d'un dérivé organique d'étain choisi parmi trichlorure d'alkylétain, dichlorure de dialkylétain, acétate d'alkyldichloroétain, acétate de dialkylchloroétain, diacétate d'alkylchloroétain, ester de trichlorurétain ou tétrachlorure d'étain et,

(iii) éventuellement, jusqu'à 10% d'un dérivé organique polaire.

2. Une composition de revêtement liquide selon la revendication 1, dans laquelle ce dopant au fluor est choisi parmi: acide trifluoroacétique, anhydride trifluoroacétique ou trifluoroacétoacétate d'éthyl et le

**0 158 399**

dérivé organique de l'étain est choisi parmi: trichlorure de monobutylétain, tétrachlorure d'étain, dichlorure de diisobutylétain ou acétate de butyldichloroétain.

3. Une composition de revêtement liquide selon l'une quelconque des revendications 1 ou 2, caractérisée en ce que le dopant au fluor forme de 2 à 10% et le dérivé organique de l'étain forme de 90 à 98% de la composition.

4. Une composition de revêtement liquide selon l'une quelconque des revendications 1 ou 2, caractérisée en ce qu'elle comprend de 1 à 10% en poids du dérivé organique polaire.

5. Une composition de revêtement liquide selon l'une quelconque des revendications 1, 3 ou 4, caractérisée en ce que ce dopant au fluor est choisi parmi: trifluoroacétate ou acide trifluoroacétique et ce dérivé organique de l'étain est choisi parmi: dichlorure de ditertiobutylétain et trichlorure de méthylétain.

6. Une composition de revêtement liquide selon l'une quelconque des revendications 1 ou 4, caractérisée en ce qu'elle comprend de 2 à 10% en poids d'acide trifluoroacétique, 80 à 97% en poids de trichlorure de monobutylétain et de 1 à 10% en poids d'un liquide organique polaire.

7. Une composition de revêtement liquide selon la revendication 4, caractérisée en ce que le dérivé organique polaire est choisi parmi: méthylisobutylcétone, anhydride acétique ou acétate d'éthyle.

8. Un procédé de préparation d'un revêtement d'oxyde d'étain dopé au fluor de haute qualité présentant une faible résistance pelliculaire et possédant un coefficient élevé de transmission de la lumière visible, caractérisé en ce qu'il consiste:

(a) à former une composition liquide contenant de:

(i) 1 à 30% en poids d'un dérivé dopant à base de fluor organique choisi parmi l'acide trifluoroacétique, l'anhydride trifluoroacétique;

(ii) 70 à 99% en poids d'un dérivé organique de l'étain choisi parmi un trichlorure d'alkylétain, un dichlorure de dialkylétain, un acétate d'alkyldichloroétain, un acétate de dialkyldichloroétain, un diacétate d'alkylchloroétain, un trichlorue d'ester de l'étain ou le tétrachlorure d'étain; et

(iii) éventuellement jusqu'à 10% en poids d'un dérivé organique polaire;

(b) à vaporiser cette composition liquide à une température de 100 à 400°C, et

(c) à mettre cette vapeur, dans une atmosphère contenant de l'oxygène, au contact d'un substrat maintenu à une température supérieure à 400°C et inférieure à 700°C, de dépôt étant mis en oeuvre pendant 45 secondes ou moins pour produire un revêtement d'une épaisseur de 160 à 250 nm, presentant une résistance pelliculaire égale ou inférieure à 40 ohms$^2$, une réflectivité infrarouge supérieure à 70% et un coefficient de transmission de la lumière dans le visible d'au moins 80%.

9. Un procédé de production d'un revêtement d'oxyde d'étain dopé au fluor de haute qualité selon la revendication 8, caractérisé en ce que cette atmosphère contenant de l'oxygène est constituée par de l'air.

10. Un procédé selon la revendication 8, caractérisé en ce que ce substrat est le verre.

0 158 399